# EUROPÄISCHE PATENTSCHRIFT

(11) **EP 1 357 450 B1**
(45) Veröffentlichungstag und Bekanntmachung des Hinweises auf die Patenterteilung: **18.08.2004**
(21) Anmeldenummer: 02009629.3
(22) Anmeldetag: 27.04.2002
(51) Int. Cl.: G05B 19/418, G06F 17/60, B65G 67/60

(54) **System zur Überwachung der Beladung eines Schiffs**
Monitoring system for loading a ship
Système de surveillance du chargement d'un bateau

(43) Veröffentlichungstag der Anmeldung: 29.10.2003
(73) Patentinhaber: TT-Line GmbH & Co., 20457 Hamburg (DE)
(72) Erfinder: Conzen, Hanns-Heinrich, 22149 Hamburg (DE); Lasch, Dietrich, 22085 Hamburg (DE); Bässgen, Uwe, 18198 Kritzmow (DE); van der Lee, Aad, 23684 Scharbeutz (DE); Hegel, Michael, 21244 Buchholz (DE); Persson, Björn, 23634 Höllviken (SE)
(74) Vertreter: Jaeschke, Rainer, Dipl.-Ing.

(56) Entgegenhaltungen:
- EP-A- 1 182 154
- WO-A-00/63805
- US-A- 6 148 291

## Beschreibung

Die Erfindung betrifft ein System zur Überwachung der Beladung oder des Beladevorgangs einer Fähre mit Fahrzeugen, vor allem mit Lastkraftwagen, so dass im folgenden überwiegend von einer Fähre und von Lastkraftwagen die Rede ist.

Vollständige Lastzüge bestehend aus Zugmaschine, Anhänger oder Sattelauflieger einschließlich einem oder mehrerer Fahrer sowie führerlose Anhänger oder Sattelauflieger (Trailer) werden auch über relativ kurze Seestrecken verschifft. Dadurch lassen sich zum einen längere Landwege vermeiden. Zum anderen kann den Fahrern die erforderliche und gesetzlich vorgeschriebene Ruhepause ermöglicht werden, während das Fahrzeug dennoch eine Teilstrecke zurücklegt.

Zum Verschiffen von Lastkraftwagen oder dergleichen sind Fähren bekannt, die auf unterschiedlicher Weise beladen werden können. Die Fähren haben häufig mehrere Fahrzeugdecks, auf welche die Fahrzeuge gestellt werden können. Je nach Größe der Fähre können weit über 100 Fahrzeuge mitgenommen werden. Dabei kommt es jedoch nicht nur auf die Anzahl der Fahrzeuge sondern vor allem auf die Frachtlänge der Fahrzeuge an, die für die Verladung auf dem Schiff in Anspruch genommen wird. Ein Lastzug kann eine Länge von beispielsweise 18 m aufweisen, und auf einer Fähre können beispielsweise 2.000 Frachtmeter zur Verfügung stehen. Die Anzahl der maximal tatsächlich mitnehmbaren Fahrzeuge kann im Laufe der Buchungen, die auch die maßgebliche Länge enthält, immer genauer berechnet werden.

Die Fahrzeuge können je nach Bauart der Fähre von vorne, von hinten oder von der Seite auf die einzelnen Decks gelangen. Auch ist es bekannt, dass innerhalb des Schiffs eine Verladerampe vorhanden ist, um von einem Deck zu dem anderen zu gelangen. Das Entladen, also das Herunterfahren der Fahrzeuge von der Fähre kann nach dem sogenannten First in - First out - Prinzip oder First in - Last out - Prinzip erfolgen. Dazu ist das Schiff mit entsprechenden Bug- und Heckklappen versehen.

Die Beladung des Schiffs beziehungsweise der Fähre erfolgt durch Frachtpersonal, dessen Leitung der sogenannte Frachtoffizier hat. Der Frachtoffizier ordnet die Verteilung der Lastkraftwagen und auch der Personenkraftwagen auf den Decks an. Dazu steht ihm eine Liste der für die betreffende Fahrt vorgesehenen und gebuchten Fahrzeuge in Papierform zur Verfügung. Die Liste kann weitere Angaben über Art und Besonderheiten des Fahrzeugs enthalten, insbesondere ob es sich um einen sogenannten Gefahrenguttransporter handelt oder um einen Kühltransporter, der einen Stromanschluss an Deck des Schiffs benötigt. Auch sind weitere für die Verladung nützliche Angaben in dieser Liste enthalten, beispielsweise das Gewicht oder die Länge des Fahrzeugs. Schließlich ist das Fahrzeug anhand des amtlichen Kennzeichens eindeutig identifiziert.

Vor Beginn der Beladung des Schiffs erhält der Frachtoffizier diese Liste in Papierform, auf der die zum Zeitpunkt des Erstellens der Liste gebuchten Fahrzeuge und die bereits eingecheckten und somit zur Beladung bereiten Fahrzeuge aufgeführt sind. Nur anhand dieser Liste kann der Frachtoffizier die Fahrzeuge identifizieren, die tatsächlich für die betreffende Fahrt vorgesehen sind. Auch kann der Frachtoffizier mit dieser Liste einschätzen wie voll des Schiff werden wird, wenn alle Fahrzeuge verladen werden müssen. Mit den zusätzlichen Angaben über Gefahrenguttransporter oder Kühltransporter kann eine Voreinteilung erfolgen.

Der Frachtoffizier steht mit seiner Liste in der Regel im Bereich der Verladerampe zum Schiff. Dort können die ankommenden Fahrzeuge gut identifiziert und auf das Deck und an den betreffenden Stellplatz weitergeleitet werden. Über ein Sprechfunkgerät steht der Frachtoffizier in Verbindung mit dem Check-In-Terminal, um erfahren zu können, ob weitere Fahrzeuge nach dem Erstellen der Liste angekommen sind. Diese nachträglich Fahrzeuge müssen handschriftlich in der Liste als zur Beladung bereit gekennzeichnet werden. Ferner können Änderungen bei der Buchung oder Neufahrzeuge, die nicht gelistet sind, übermittelt werden, die ebenfalls handschriftlich nachgetragen werden müssen.

Auch steht der Frachtoffizier über das Sprechfunkgerät in Verbindung mit dem Hafenpersonal, welches im Wartebereich für die zu befördernden Fahrzeuge steht. Nach Aufforderung werden die betreffenden Fahrzeuge zur der Verladerampe geschickt. Über das Sprechfunkgerät wird dem Frachtoffizier mitgeteilt, welches Fahrzeug nunmehr auf dem Weg ist.

Weiterhin steht der Frachtoffizier über das Sprechfunkgerät in Verbindung mit dem Schiffspersonal, welches sich auf dem Deck befindet und ihm beispielsweise die Standorte von bestimmten Fahrzeugen, insbesondere von Gefahrguttransportern mitteilt. Zumindest deren Stellplätze müssen ebenfalls gelistet werden.

Die Handhabung einer derartigen Liste in Papierform ist äußerst umständlich. Es ist zu beachten, dass eine Liste aufgrund der Vielzahl der Fahrzeuge mehrere Blätter umfasst, die ständig hin- und hergeblättert werden müssen. Ein einfacher und informativer Überblick ist nicht gegeben, und nur erfahrene Frachtoffiziere können eine reibungslose Verladung durchführen. Insbesondere bei rauen Wetterbedingungen wie Sturm und Regen ist eine Handhabung der Liste kaum mehr möglich. Auch sind nachträgliche handschriftliche Ergänzungen nur mit Mühe und entsprechendem Zeitaufwand durchzuführen.

Ein besonderer Nachteil besteht jedoch darin, dass der Frachtoffizier nicht zeitnah über den tatsächlichen Stand der Buchungen einerseits und der eingecheckten Fahrzeuge andererseits sowie der bereits verladenen Fahrzeuge informiert ist. Letztere muss er sogar im Gedächtnis behalten. Es fehlt vor allem die relativ genaue und zeitnahe Angabe der tatsächlich auf dem Schiff verbrauchten Frachtmeter, anhand welcher er die Verteilung der verbleibenden Fahrzeuge durchführen muss. Insbesondere bei einem nahezu ausgebuchten Schiff müssen die Stellplätze für die Gefahrguttransporter oder für die Kühltransporter sorgsam verteilt werden. Ansonsten besteht die Gefahr, dass ein gebuchter Gefahrguttransporter oder ein gebuchter Kühltransporter nicht mitgenommen werden kann, da diese Plätze versehentlich belegt worden sind.

Durch die WO-A-0063805 wird ein System zur Beladung eines Schiffs mit herkömmlicher Ladung beschrieben, mit welchem die Ladung im Laderaum geometrisch optimal platziert werden kann. Dabei wird davon ausgegangen, dass die Ladung nach Art, Größe und Gewicht bekannt ist. Vor allem ist jedoch Voraussetzung, dass die gesamte zu verladene Ladung bereits am Terminal bereitsteht. Erst dann kann die Beladung beginnen, weil erst dann feststeht, welche Ladung wo im Laderaum unterzubringen ist. Dies ist auf eine Fähre, beispielsweise im Roll-On-Roll-Off-Betrieb, nicht übertragbar.

Der Erfindung liegt die Aufgabe zu Grunde, ein System für eine zeitnahe Überwachung der Beladung und des Beladevorgangs eines Schiffs bereitzustellen.

Die Aufgabe wird gemäß der Erfindung durch ein System gelöst, das mit einer zentralen Datenverarbeitungsanlage mit wenigstens einem Speichermedium, auf dem die für die Beladung gebuchten Fahrzeuge mittels wenigstens eines Datensatzes mit wenigstens einem Identifizierungswert gespeichert sind, der das Fahrzeug eindeutig identifiziert, und einen elektronisch und/oder opto-elektronisch lesbaren mobilen Datenträger umfasst, auf dem zumindest ein Zuordnungswert des Datensatzes eines zur Beladung bereiten Fahrzeugs gespeichert und/oder lesbar ist. Es ist wenigstens ein mobiles Anzeigegerät vorhanden, das über eine drahtlose Datenübertragungsstrecke mit der zentralen Datenverarbeitungsanlage in Verbindung steht und zumindest die Anzahl und/oder die Frachtlänge der zur Beladung gebuchten Fahrzeuge und die Anzahl und/oder die Frachtlänge der für die Beladung bereiten Fahrzeuge von der zentralen Datenverarbeitungsanlage empfängt und auf einem Display anzeigt. Ferner umfasst das System wenigstens ein mobiles elektronisches und/oder opto-elektronisches Lesegerät zum Erfassen zumindest des Zuordnungswertes auf dem mobilen Datenträger eines zur Beladung vorgesehenen Fahrzeugs, welches Lesegerät über eine drahtlose Datenübertragungsstrecke zumindest mit der zentralen Datenverarbeitungsanlage und/oder dem mobilen Anzeigegerät in Verbindung steht, um zumindest den Zuordnungswert unmittelbar oder über die zentrale Datenverarbeitungsanlage an das mobile Anzeigegerät zu übermitteln derart, dass zumindest ein Identifizierungswert des zur Beladung vorgesehenen Fahrzeugs auf dem Display des Anzeigegeräts anzeigbar ist. Ein derartiges System hat den Vorteil, dass auf eine Liste in Papierform vor Ort, also unmittelbar beim, im oder vor dem Schiff verzichtet werden kann. Der Frachtoffizier kann alle für die Beladung erforderlichen Informationen über das Anzeigegerät erhalten.

Zunächst ist für den Frachtoffizier vor allem von Interesse, wie viele Fahrzeuge beziehungsweise wie viele Frachtmeter gebucht sind und wie viele Fahrzeuge beziehungsweise wie viele Frachtmeter bereits zur Beladung eingecheckt haben und zur Beladung bereit stehen. Diese Vorinformation ist auf dem Display des Anzeigegeräts ersichtlich. Schließlich ist von Interesse, welches konkrete Fahrzeug zur Beladung vorgesehen ist, also von dem Hafenpersonal in Richtung der Verladerampe geschickt worden ist. Hierbei ist zu beachten, dass sich zwischen den Wartespuren für die Fahrzeuge und der Verladerampe des Schiffs häufig eine relativ große Distanz vorhanden und eine freie Sicht auf die wartenden Fahrzeuge nicht möglich ist. Zudem ist dies bei Dunkelheit oder bei dazwischen stehenden Hafengebäuden ohnehin nicht möglich.

Dazu ist gemäß der Erfindung vorgesehen, dass über das Lesegerät zunächst der mobile Datenträger des auf den Weg gebrachten Fahrzeugs eingelesen wird. Der darin über den Zuordnungswert eindeutig erfassbare Identifizierungswert des betreffenden Fahrzeugs wird dem Anzeigegerät unmittelbar oder mittelbar über die zentrale Datenverarbeitungsanlage zugeführt, so dass der Frachtoffizier das ankommende Fahrzeug eindeutig identifizieren kann. Dieser Identifizierungswert enthält zweckmäßigerweise ein von außen am Fahrzeug unmittelbares erkennbares Merkmal und wird daher üblicherweise zumindest teilweise das amtliche Kennzeichen der Zugmaschine oder des Anhängers oder des Sattelaufliegers sein.

Gibt der Frachtoffizier nunmehr die Anweisung über das nach wie vor zweckmäßige Sprechfunkgerät, weitere Fahrzeuge zur Verladung auf das Schiff zu schicken, werden von den Hafenpersonal die betreffende Anzahl der Fahrzeuge oder die betreffende Art der Fahrzeuge, beispielsweise Gefahrguttransporter oder Kühltransporter, zur Beladung vorgesehen. Hierzu wird der mobile Datenträger, der sich am Fahrzeug befindet oder vom Fahrer bereitgehalten wird, mittels des Lesegeräts eingelesen. Anschließend wird das Fahrzeug zur Verladerampe geschickt.

Nach dem Einlesen des mobilen Datenträgers am Fahrzeug ist der Identifizierungswert, also beispielsweise das amtliche Kennzeichen, auf dem Display des mobilen Anzeigegeräts anzeigbar oder erscheint selbsttätig. Der Frachtoffizier kann das ankommende Fahrzeug identifizieren und auf das Schiff schicken. Erscheint ein ankommendes Fahrzeug nicht auf dem Display, ist dieses Fahrzeug offenbar nicht für diese Beladung des Schiffs vorgesehen und muss warten.

Es kann hierbei zweckmäßig sein, wenn ein Einlesen des mobilen Datenträgers mit dem Lesegerät nur dann möglich ist, wenn für eine konkrete Fahrt eines Schiffs das zur Beladung bereite Fahrzeug auch gebucht und einen entsprechenden Verladeplatz auf dem Schiff erhalten hat. Ansonsten kann eine Fehlermeldung am Lesegerät erfolgen, so dass beispielsweise ein zu früh auf dem Hafengelände stehendes Fahrzeug dennoch nicht mitgenommen wird, was ansonsten zu einer Fehlbuchung oder Überbuchung des betreffenden Schiffs führt.

Neben der eindeutigen Identifizierung des zur Beladung vorgesehenen Fahrzeugs ist für den Frachtoffizier auch von Interesse, wie viele Fahrzeuge auf dem Schiff vorhanden oder wie viele Frachtmeter auf dem Schiff bereits verbraucht sind und mit wie vielen Fahrzeugen er noch rechnen muss. Es ist daher weiterhin vorgesehen, dass die Anzahl und/oder die Frachtlänge der zur Beladung vorgesehenen Fahrzeuge entsprechend dem Fortgang der Beladung erfasst, aktualisiert und an das Anzeigegerät übertragen und auf dem Display anzeigbar ist. Dadurch wird erreicht, dass der Frachtoffizier eine Übersicht über die Anzahl der gebuchten Fahrzeuge, die Anzahl der zur Beladung bereiten Fahrzeuge und der Anzahl der für die Beladung vorgesehenen Fahrzeuge erhält. Da die für Beladung vorgesehenen Fahrzeuge entweder bereits auf dem Schiff sind oder aber sich auf dem Weg dorthin befinden, ist diese Anzahl mit Zeitverzögerung in der Regel identisch mit der Anzahl der verladenen Fahrzeuge. Dadurch erhält der Frachtoffizier schließlich auch die Information, wenn alle gebuchten oder alle für die Beladung bereiten Fahrzeuge an Bord des Schiffs sind. Der Beladevorgang kann dann beendet oder unterbrochen werden, bis beispielsweise ein weiteres Fahrzeug zur Beladung bereitgestellt wird.

Gemäß einer weiteren Ausführungsform der Erfindung ist vorgesehen, dass zumindest die für die Beladung maßgeblichen Werte der Datensätze der für die Beladung gebuchten und/oder der für die Beladung bereiten und/oder der für die Beladung vorgesehenen Fahrzeuge über das Anzeigegerät abrufbar und auf dem Display anzeigbar sind. Dies hat den Vorteil, dass der Frachtoffizier über das mobile Anzeigegerät Einzelheiten über die jeweiligen Fahrzeuge erhalten kann. Insbesondere ist es zweckmäßig, wenn der Datensatz eines Fahrzeugs die Fahrzeugart (Sattelzug, Schwerlastzug, Gliederzug, Trailer, Anhänger, Zugmaschine, einfacher Lastwagen und dergleichen), die Frachtlänge oder die tatsächliche Länge des Fahrzeugs, die Anzahl der mitgeführten Personen sowie besondere Merkmale, wie Höhe, Frachtart oder bestimmte Erfordernisse für die Beladung und insbesondere das oder die amtlichen Kennzeichen enthält. Damit ist es möglich, dass der Frachtoffizier beispielsweise die Anzahl der Gefahrguttransporter und/oder die Anzahl der Kühltransporter abrufen kann, um diese entsprechend auf dem Schiff zur verteilen. Eine versehentliche Belegung eines für einen Gefahrguttransporter vorgesehenen Platzes mit einem herkömmlichen Lastzug oder ein Belegen eines mit einem Stromversorgung versehenen Stellplatzes mit einem anderen Lastzug werden somit zuverlässig vermieden. Insbesondere kann der Frachtoffizier hieraus die Informationen entnehmen, ob diese besonderen Fahrzeuge zur Beladung bereit stehen oder bereits beladen sind. Fehlt beispielsweise ein Gefahrguttransporter auf dem Hafengelände, da das Fahrzeug noch unterwegs ist, kann der Frachtoffizier durch geschickte Verteilung dennoch einen Stellplatz auf dem Schiff freihalten, der für diesen Transporter geeignet ist. Entsprechendes gilt für Kühltransporter.

Es kann zweckmäßig sein, wenn die Aktualisierung der auf dem mobilen Anzeigegerät anzeigbaren Werte und Daten und insbesondere die Anzeige der für die Beladung vorgesehenen Fahrzeuge selbsttätig bei jeder Änderung beziehungsweise nach jedem Erfassen durch das Lesegerät erfolgt. Dies hat den Vorteil, dass der Frachtoffizier stets den aktuellen Stand der gebuchten, der zur Beladung bereiten und/oder der für die Beladung vorgesehen und beladenen Fahrzeuge unmittelbar erhält. Andererseits besteht hier die Gefahr, dass die Änderungen nicht unmittelbar oder bewusst wahrgenommen werden. Insbesondere bei einem kleineren Display, das nur eine bestimmte Anzahl von Werten, Daten und dergleichen wiedergeben kann, besteht die Gefahr, dass durch die Aktualisierung und die Anzeige der neuesten Daten ein alter Wert, der noch nicht vom Frachtoffizier geprüft worden ist, nicht mehr im Anzeigefenster des Displays erscheint. Es kann beispielsweise sein, dass ein Fahrzeug, dessen mobiler Datenträger bereits eingelesen worden ist, noch auf dem Weg zur Verladerampe ist, da sich der Fahrer auf dem teilweise recht unübersichtlichen und weitläufigen Hafengelände verfahren hat. Wird nun die Aktualisierung zu schnell durchgeführt, besteht die Gefahr, dass dieser Wert nicht mehr auf dem Display ist und übersehen wird und dass das Fahrzeug nicht an Bord gekommen ist.

Es ist daher gemäß einer anderen Ausführungsform der Erfindung vorgesehen, dass die Aktualisierung der auf dem mobilen Anzeigegerät anzeigbaren Werte und Daten nach Aufforderung durch das mobile Anzeigegerät erfolgt. Dies hat den Vorteil, dass der Frachtoffizier die Aktualisierung beziehungsweise deren Zeitpunkt selbst bestimmen kann. Insbesondere kann er die zur Beladung vorgesehenen Fahrzeuge derart schubweise beim Hafenpersonal anfordern, dass er stets die Übersicht behält.

Es kann in beiden Fällen zweckmäßig sein, wenn eine zumindest über die zentrale Datenverarbeitungsanlage abrufbare oder in einem Zwischenspeicher des Anzeigegeräts hinterlegte Liste erstellt wird, in der zumindest die Identifizierungswerte in der Reihenfolge des Einlesens durch das Lesegerät aufgeführt sind. dies ist vor allem deshalb zweckmäßig, da die Fahrzeuge in der Regel auch in dieser Reihenfolge starten und auf dem Schiff ankommen werden. Es können Mittel vorhanden sein, die das Anzeigefenster so verschieben, dass ältere Werte der Liste wieder oder jüngere Werte vorab zu sehen sind.

In jedem Fall ist es günstig, wenn die Aktualisierung der auf dem mobilen Anzeigegerät anzeigbaren Werte und Daten zumindest im Falle einer tatsächlichen Änderung oder einer abrufbaren Änderung der Anzeige optisch und/oder akustisch durch das Anzeigegerät gesondert gemeldet wird. Hierdurch wird erreicht, dass beispielsweise durch den manuellen Abruf einer eventuellen Aktualisierung der Frachtoffizier eine gesonderte Meldung erhält, wenn tatsächlich eine Änderung im Vergleich von vorher im Anzeigegerät angezeigbaren Werte und Daten erfolgt ist. Erfolgt keine Meldung, braucht der Frachtoffizier nicht zu prüfen, wo und welche Änderungen erfolgt sind. Zum anderen wird erreicht, dass beispielweise durch ein optisches oder akustisches Signal dem Frachtoffizier mitgeteilt wird, dass eine Änderung insbesondere bei den gebuchten und/oder zur Beladung bereiten Fahrzeugen erfolgt ist. Der Frachtoffizier erhält somit zeitnah und unmittelbar den Hinweis, welche Fahrzeuge zusätzlich zur Beladung bereit sind. Dies ist insbesondere dann zweckmäßig, wenn auf bestimmte Fahrzeuge wie Gefahrguttransporter oder Kühltransporter gewartet wird.

Grundsätzlich ist es zweckmäßig, wenn das fehlerfreie Einlesen des mobilen Datenträgers und die Erfassung des Zuordnungswertes durch das Lesegerät optisch und/oder akustisch angezeigt wird. Hierdurch werden Fehler dahingehend vermieden, dass ein Fahrzeug auf den Weg gebracht wird, ohne dass dessen Datenträger durch das Lesegerät tatsächlich erfasst worden ist.

Missverständnisse und Zeitverzögerungen können somit vermieden werden.

Weiterhin ist es zweckmäßig, wenn auch das mobile Anzeigegerät eine elektronische und/oder opto-elektronische Leseeinheit umfasst, über die der mobile Datenträger lesbar und zumindest der Zuordnungswert des mobilen Datenträgers erfassbar ist. Diese Möglichkeit erlaubt dem Frachtoffizier, dass Fahrzeug, dass sich tatsächlich auf dem Schiff befinden wird, eindeutig zu identifizieren. Der eingelesene Zuordnungswert kann dazu verwendet werden, dieses Fahrzeug beziehungsweise dessen Status in der angezeigten Liste der zur Beladung vorgesehenen Fahrzeuge zu aktualisieren, indem dessen Status auf "geladen" gesetzt wird. Ferner wird die Anzahl der beladenen Fahrzeuge um einen Zähler erhöht. Die Bediensicherheit und insbesondere die lückenlose Erfassung des Beladevorgangs ist somit möglich.

Weiterhin kann das mobile Anzeigegerät eine Eingabeeinheit umfassen, über die Eingaben und Angaben über das beladene Fahrzeug eingegeben und an die zentrale Datenverarbeitungsanlage übertragen werden können. Hierdurch können aktuelle Änderungen, die weder bei der Buchung noch beim Einchecken berücksichtigt worden sind, nachträglich zu der zentralen Datenverarbeitungsanlage übermittelt werden. Vor allem besteht die Möglichkeit, dass ein Fahrzeug beim Passieren des Verladeoffiziers von diesem bestätigt wird und die aktuellen Liste der zur Beladung vorgesehenen und eingelesenen Fahrzeugen aktualisiert wird, während der Zähler der verladenen Fahrzeuge um eins erhöht wird.

Dies ist beispielsweise auch dann zweckmäßig, wenn das Fahrzeug als normales Fahrzeug gemeldet worden ist, sich jedoch tatsächlich um einen Kühltransporter handelt, der auf einen freien Stellplatz für Kühltransporter gestellt worden ist. Auch kann die Anzahl der Fahrer verändert werden. Schließlich ist es möglich, dass Fahrzeug aus der Buchung zu streichen, wenn sich das Fahrzeug beispielsweise in einem nicht transportsicheren Zustand befindet. Vor allem ist es jedoch möglich, den zugewiesenen Stellplatz des betreffenden Fahrzeugs einzugeben. Dies ist insbesondere bei Gefahrguttransportern erforderlich. Die betreffenden Daten können von der Datenverarbeitungsanlage für der Erstellung des Beladeplans, der für jede Fahrt eines Schiffs anzufertigen ist, verwendet werden.

Gemäß einer weiteren Ausführungsform der Erfindung kann wenigstens ein weiteres mobiles elektronisches und/oder opto-elektronisches Lesegerät vorhanden sein, dass über eine drahtlose Datenübertragungsstrecke zumindest mit der zentralen Datenverarbeitungsanlage in Verbindung steht und mit dem der mobile Datenträger lesbar und zumindest der Zuordnungswert des mobilen Datenträgers des beladenen Fahrzeugs erfasst und an die zentrale Datenverarbeitungsanlage übertragen wird. Dieses weitere mobile Lesegerät kann beispielsweise vom Schiffspersonal bedient werden. Dies ist insbesondere dann zweckmäßig, wenn sich der Frachtoffizier weiter entfernt vom Schiff selbst befindet oder wenn das Schiff mehrere Decks aufweist, die von Frachtoffizier nicht einsehbar sind. Das Schiffspersonal kann somit die tatsächlich an Bord befindlichen Fahrzeuge erfassen und an die zentrale Datenverarbeitungsanlage übermitteln. Der Frachtoffizier braucht daher keine Eingabe an seinem mobilen Anzeigegerät zu tätigen.

Besonders zweckmäßig ist es hierbei, wenn das weitere Lesegerät eine Eingabeeinheit umfasst, über die der Standort des Fahrzeugs auf dem Schiff eingebbar ist. Dieser Standort kann zusammen mit dem eingelesenen Datenträger am Fahrzeug zur Erstellung eines vollständigen Beladeplans, also nicht nur der Gefahrentransporter sondern auch der herkömmlichen Fahrzeuge benutzt werden. Die Reederei erhält somit einen vollständigen Plan, welches Fahrzeug wo gestanden hat, was beispielsweise im Falle einer Havarie günstig ist.

Es können auf dem Schiff elektronisch und/oder opto-elektronisch lesbare Datenträger vorhanden sein, die den Stellplatz oder den Stellbereich auf dem Schiff markieren und die durch das weitere Lesegerät lesbar sind. Dies hat den Vorteil, dass über das Lesegerät keine manuellen Eingaben erfolgen müssen. Fehleingaben werden vermieden. Es kann beispielsweise vorgesehen werden, dass zunächst der mobile Datenträger am Fahrzeug eingelesen wird und anschließend der Datenträger auf dem betreffenden Stellplatz. Die eingelesenen Daten können unmittelbar für die Erstellung des Beladeplans herangezogen werden. Selbstverständlich ist es auch möglich, dass die auf dem Schiff befindlichen Datenträger von der Leseeinheit des Anzeigegeräts gelesen werden können.

In zweckmäßiger Weise sind das mobile Anzeigegerät, das mobile Lesegerät und/oder das weitere mobile Lesegerät gleichartig ausgebildet. Dabei kann vorgesehen werden, dass das mobile Anzeigegerät, dass mobile Lesegerät und das weitere mobile Lesegerät unterschiedliche Programmierungen für die jeweilige Funktion besitzen und in entsprechender Weise mit der zentralen Datenverarbeitungsanlage zusammenwirken. Fehlbedienungen können somit zuverlässig vermieden werden. Insbesondere kann erreicht werden, dass mit dem ersten mobilen Lesegerät tatsächlich nur solche mobile Datenträger erfassbar sind, die solchen Fahrzeugen zugeordnet sind, die für die betreffende Fahrt des Schiffs gebucht und eingecheckt worden sind. Andere mobile Datenträger anderer Fahrzeuge und auch bereits eingelesene Datenträger können nicht erfasst werden. Auch wird es nicht möglich sein, solche Fahrzeuge manuell einzugeben. Mit dem weiteren mobilen Lesegerät ist dann nur möglich, solche mobile Datenträger solcher Fahrzeuge einzulesen, die zur Beladung vorgesehen sind und deren Datenträger zuvor bereits von dem ersten mobilen Lesegerät erfasst worden sind.

Alternativ kann vorgesehen werden, dass das mobile Anzeigegerät, das mobile Lesegerät und/oder das weitere mobile Lesegerät als Terminal ausgebildet sind, deren Eingaben oder Anzeigen durch eine vorgebbare Tastenfolge zu der Datenverarbeitung gesandt oder von dieser empfangen werden. Die Terminals können eine Grund- oder Standardprogrammierung aufweisen, um bestimmte Befehlsarten oder -signale ausüben beziehungsweise empfangen zu können. Erst durch den Aufbau der Datenverbindung mit der Datenverarbeitungsanlage beispielsweise nach einem codierten Einloggen erhalten die Terminals die Funktion als Anzeigegerät oder Lesegerät. Dies hat den Vorteil, das Änderungen nur im Anzeigegerät oder nur im Lesegerät nicht möglich sind. Alle beteiligten Terminals haben den gleichen Status, wie er von der zentralen Datenverarbeitungsanlage vorgegeben wird. Die dort aufgrund einer Eingabe durch das Lesegerät, das Anzeigegerät oder beim Check-In oder bei der Buchung erfolgten Änderungen sind sofort abrufbar. Vor allem besteht ein Vorteil darin, dass die Geräte als solche ohne weiteres untereinander ausgetauscht oder gegen neue ersetzt werden können, solange die Grundprogrammierung übereinstimmt. Eine Anpassung eines Programms oder dergleichen bei den Geräten selbst ist nicht erforderlich. Die Handhabung wird hier noch einmal vereinfacht, weil die Geräte beispielsweise auf dem Schiff mitgeführt werden können und nur noch ein Einloggen in die zentrale Datenverarbeitungsanlage des betreffenden Hafens zu erfolgen braucht.

Gemäß einer bevorzugten Ausführungsform sind das mobile Anzeigegerät, das mobile Lesegerät und das weitere mobile Lesegerät wasserdicht und stoßfest ausgebildet. Dies hat den Vorteil, dass auch bei rauen Betriebsbedingungen bei der Frachtverladung eines Schiffs ein Versagen und/oder eine Beschädigung der Geräte nicht zu befürchten ist. Weiterhin ist es hierbei zweckmäßig, wenn zumindest das Display des mobilen Anzeigegeräts und vorzugsweise die Eingabeeinheiten des mobilen Anzeigegeräts, des mobilen Lesegeräts und auch des weiteren mobilen Lesegeräts beleuchtet sind und/oder beleuchtete Symbole besitzen. Dies hat den Vorteil, dass eine Bedienung der Geräte auch bei schlechten Sichtverhältnissen ohne weiteres und fehlerfrei möglich ist.

Die Erfindung wird im folgenden anhand der schematischen Zeichnung näher erläutert. Es zeigen:
- Fig. 1: die Draufsicht auf ein Verladeterminal eines Hafens und
- Fig. 2: ein Blockschaltbild des Systems gemäß der Erfindung.

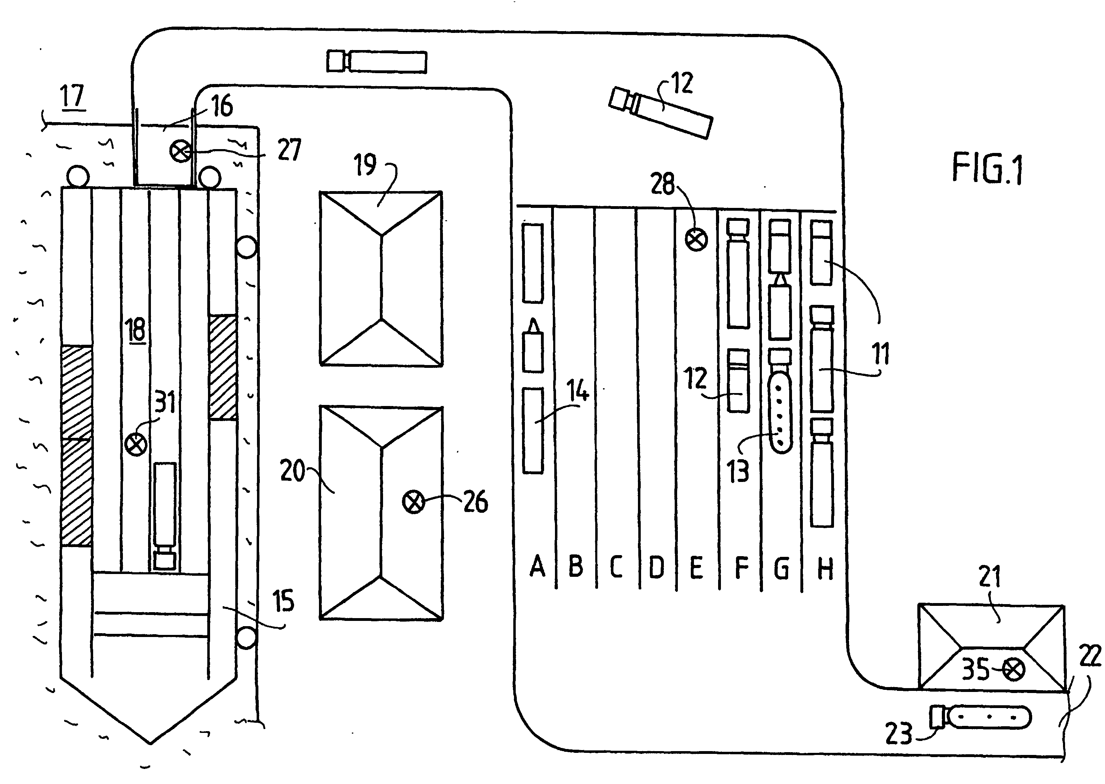

In Figur 1 ist ein Hafenterminal zum Verladen von Fahrzeugen, insbesondere Lastkraftwagen 11, 12, 13 und Sattelaufliegern oder Anhängern 14, auf ein Schiff 15 dargestellt. Das Schiff 15 liegt verankert an dem betreffenden Liegeplatz und ist über eine Verladerampe 16 mit dem Anleger 17 verbunden. Über die Verladerampe 16 können die Fahrzeuge auf das Deck 18 gelangen. Sofern das Schiff mehrere Decks aufweist, können mehrere Laderampen 16 oder aber auch schiffsinterne Rampen vorgesehen sein, die der Übersichtlichkeit halber in der Zeichnung nicht dargestellt sind.

Es ist ferner ein Wartebereich mit Wartespuren A, B, ... H ersichtlich, auf dem die Fahrzeuge, die für die Beladung bereit sind, abgestellt werden können. Es sind Hafengebäude 19, 20 und 21 dargestellt, wie sie in etwa in einer typischen Anordnung auf einem Hafenterminal vorhanden sein können. Ferner ist die Zufahrtsstraße 22 gezeigt, über welche die Fahrzeuge vom Straßennetz zum Hafenterminal des Hafens gelangen können.

Grundsätzlich stellt sich für ein einzelnes Fahrzeug die Verladung so dar, dass zunächst das Fahrzeug bei der zuständigen Reederei für eine bestimmte Fahrt eines Schiffs zu einer bestimmten Abfahrtszeit und zu einem bestimmten Zielhafen gebucht worden ist. Sobald das Fahrzeug den Terminal erreicht, ist es erforderlich, einzuchecken. Dies erfolgt beispielsweise im Hafengebäude 21, in dem ein Schalter 35 der betreffenden Reederei vorhanden ist. Mit dem Einchecken werden die für die Verladung erforderlichen Unterlagen, also insbesondere die Buchungsnummer und die Bestätigung über den Verladeplatz bereitgestellt. Das Fahrzeug wird anschließend in einer Wartespur A, B, ... H, bis auf die weitere Einweisung durch das Hafenpersonal abgestellt. Bei herkömmlichen Verladevorgängen wird so vorgegangen, dass der Frachtoffizier im Bereich der Verladerampe 16 steht und über Sprechfunk dem Hafenpersonal, das sich im Bereich der Warteschlangen A, B, ... H aufhält die Anweisung gibt, das eine oder andere Fahrzeug zur Verladung auf das Schiff auf den Weg zu bringen. Das so losgeschickte Fahrzeug gelangt einige Zeit später zum Frachtoffizier, der den Fahrer entsprechend einweist, über die Verladerampe 16 auf einen Stellplatz auf dem Deck 18 zu fahren. Es kann Schiffspersonal vorgesehen werden, das die exakte Einweisung auf dem Deck und die Sicherung des Fahrzeugs vornimmt. Der Frachtoffizier steht, wie in der Zeichnung ersichtlich, mit einigem Abstand zu den Wartespuren A, B, ... H für die Fahrzeuge. Insbesondere ist in der Regel die freie Sicht auf die wartenden Fahrzeuge durch die Hafengebäude 19, 20 versperrt. Er kann daher nur über Sprechfunk die Mitteilung erhalten, welches Fahrzeug gerade auf dem Weg ist und welches Fahrzeug noch auf Verladung wartet. Die verladenen Fahrzeuge kann er auf seiner Buchungsliste entsprechend kennzeichnen.

Bei dem System zur Überwachung der Beladung und des Beladevorgangs des Schiffs 15 ist vorgesehen, dass für das ankommende Fahrzeug 23 beim Check-In 35 ein mobiler Datenträger 24 beispielsweise mittels einer Schreibeinrichtung 25 erzeugt wird. Dieser mobile Datenträger 24 enthält zumindest wenigstens einen Zuordnungswert, über den ein Datensatz und somit das Fahrzeug eindeutig identifizierbar ist. Der Datenträger ist elektronisch und/oder opto-elektronisch durch ein entsprechendes Lesegerät lesbar. Vorzugsweise umfasst der mobile Datenträger einen Bar-Code oder einen zweidimensionalen Code, der beispielsweise durch einen Scanner optisch abgetastet und erfasst werden kann. Zweckmäßig ist auch eine alphanumerische Codierung vorhanden, um eine Kontrolle durch das Hafenpersonal zu erleichtern. Anschließend kann das Fahrzeug wie üblich in der entsprechenden Wartespur A, B, ... H abgestellt werden.

Vor dem Check-In liegt die Liste der für die betreffende Fahrt gebuchten Fahrzeuge vor. Beim Check-In werden die ankommenden Fahrzeuge mit dieser Liste vorglichen und es kann die Anzahl derjenigen Fahrzeuge ermittelt werden, die gebucht sind und die bereits für die Beladung bereit stehen. Schließlich kann festgestellt werden, ob zusätzliche Fahrzeuge ankommen oder ob Fahrzeuge aus der Buchung genommen werden. Auch ist es möglich, festzustellen, ob alle Fahrzeuge bereits im Wartebereich abgestellt worden und somit zur Beladung bereit sind.

Das System weist eine zentrale Datenverarbeitungsanlage 26 auf, die beispielsweise in einem Hafengebäude 20 angeordnet sein kann. In dieser Datenverarbeitungsanlage werden zum einen die Buchungslisten und zum anderen die Listen der eingecheckten Fahrzeuge erstellt. Insbesondere ist es möglich, die Anzahl der gebuchten und der eingecheckten Fahrzeuge zu bestimmen. Auch enthalten diese Listen zumindest in elektronischer Form weitere Angaben über das Fahrzeug, nämlich ob es sich um einen Gefahrguttransporter 13 oder um einen Kühltransporter 12 oder aber um einen herkömmlichen Lastzug 11 handelt.

Es ist ein mobiles Anzeigegerät 27 vorgesehen, dass vom Frachtoffizier getragen wird, der sich wie üblich im Bereich der Verladerampe 16 aufhält. Das mobile Anzeigegerät 27 kann auch im Bereich der Verladerampe 16 fest installiert sein. Das mobile Anzeigegerät steht über eine drahtlose Datenübertragungsstrecke in Verbindung mit der zentralen Datenverarbeitungsanlage. Bei einem im Bereich der Verladerampe 16 festinstalliertem Gerät kann die Datenübertragung auch drahtgebunden erfolgen. Es ist hierdurch möglich, dass zumindest die Anzahl der gebuchten und die Anzahl der zur Beladung bereit stehenden Fahrzeuge an das mobile Anzeigegerät übermittelt und auf einem Display angezeigt werden. Der Frachtoffizier erhält somit unmittelbar die Angabe, wie voll das Schiff werden wird, wenn alle Fahrzeuge ankommen und zur Beladung bereit stehen. Bei größeren Schiffen oder mehreren Zufahrtsrampen oder mehreren Decks können auch mehrere gleichberechtigte Anzeigegeräte 27 und zweckmäßig sein.

Weiterhin umfasst das System ein mobiles Lesegerät 28, mit dem der vorher erstellte mobile Datenträger elektronisch und/oder opto-elektronisch gelesen werden kann. Dieses Lesegerät 28 wird vom Hafenpersonal im Bereich der Wartenspuren A, B, ... H getragen. Das mobile Lesegerät steht ebenfalls über eine drahtlose Datenübertragungsstrecke mit der Datenverarbeitungsanlage 26 oder aber unmittelbar mit dem mobilen Anzeigegerät 27 in Verbindung.

Beim Beladen des Schiffs 15 mit den einzelnen Fahrzeugen wird vom Frachtoffizier über Sprechfunk oder dergleichen das Hafenpersonal angewiesen, ein bestimmtes Fahrzeug oder eine bestimmte Anzahl von Fahrzeugen oder bestimmte Arten von Fahrzeugen zur Beladung vorzusehen und in Richtung auf die Verladerampe 16 auf den Weg zu bringen. Das Hafenpersonal liest dann mit dem mobilen Lesegerät 28 den mobilen Datenträger 24 am Fahrzeug ein. Der erfasste Zuordnungswert, der das Fahrzeug über dessen Datensatz eindeutig identifiziert, wird an die zentrale Datenverarbeitungsanlage gesendet, die wiederum zumindest den Identifizierungswert aus dem Datensatz zu dem mobilen Anzeigegerät weiter gibt. Dies kann selbsttätig oder erst nach Aufforderung durch das mobile Anzeigegerät 27 erfolgen. Auf dem Display wird dann der Identifizierungswert oder die Identifizierungswerte der auf den Weg gebrachten und somit zur Beladung vorgesehenen Fahrzeuge in Form einer Liste dargestellt werden.

In üblicher Weise wird der Identifizierungswert sich aus dem amtlichen Kennzeichen zusammensetzen, da dieses in der Regel einzigartig sein wird. Der Frachtoffizier kann nunmehr anhand des Identifizierungswertes erkennen, dass das auf ihn zu kommende Fahrzeug ein von ihm angefordertes Fahrzeug ist. Er kann dieses Fahrzeug unmittelbar auf seinen Stellplatz verweisen. Auch kann er das Fahrzeug über sein Anzeigegerät als tatsächlich verladen bestätigen und markieren. Im Falle, das ein Fahrzeug ankommt, welches auf seinem Anzeigegerät nicht dargestellt ist, kann er dieses Fahrzeug zurückweisen oder in eine Wartebucht stellen, bis die Angelegenheit geklärt worden ist. Fehlbuchungen oder Fehltransporte werden zuverlässig vermieden.

Mit dem Einlesen des mobilen Datenträgercodes durch das mobile Lesegerät wird gleichzeitig der Status des betreffenden Fahrzeugs aktualisiert und dessen Status auf "geladen" gesetzt. Die Anzahl der Fahrzeuge oder deren Frachtlänge, die für die Beladung vorgesehen und die tatsächlich auf den Weg gebracht worden sind, wird demnach entsprechend aktualisiert. Diese Anzahl kann ebenfalls von der zentralen Datenverarbeitungsanlage auf das mobile Anzeigegerät 27 übermittelt werden. Letztere Anzahl kann aber auch erst dann erzeugt oder verändert werden, wenn die Verladung durch den Frachtoffizier durch eine entsprechende Eingabe am Anzeigegerät bestätigt worden ist. Der Frachtoffizier erhält auf seinem Display dann die unmittelbare Angabe über die Anzahl der gebuchten, der für die Beladung bereiten und der bereits verladenen Fahrzeuge. Er kann dann durch diese Informationen leicht abschätzen, wie der Beladevorgang weiter fortgesetzt werden muss.

Das mobile Anzeigegerät 27 weist ferner eine Eingabeeinheit 29 auf, über die bestimmte Eingaben und Angaben der beladenen Fahrzeuge eingegeben werden können. Diese Daten können an die Datenverarbeitungsanlage übertragen werden. Hierdurch ist es möglich, beispielsweise einen zugewiesenen Stellplatz eines Fahrzeugs an die Datenverarbeitungsanlage zur Erstellung eines Beladeplans zu übermitteln. Auch können über diese Eingabeeinheit weitere Daten von bestimmten Fahrzeugen von der zentralen Datenverarbeitungsanlage abgerufen werden. So können beispielsweise die Anzahl, die Art und die Länge bestimmter Fahrzeuge abgerufen werden. Auch können Angaben bestimmter Fahrzeuge beispielsweise anhand deren Kennzeichen abgerufen werden. Insbesondere kann der Frachtoffizier die Anzahl der Gefahrguttransporter 13, der Kühltransporter 12 und die Anzahl der herkömmlichen Lastzüge 11 ablesen. Eine Zuweisung auf besondere Stellplätze, die in Figur 1 schraffiert dargestellt sind, ist somit möglich. Vor allem kann der Frachtoffizier noch fehlende besondere Fahrzeuge abwarten beziehungsweise die besonderen Stellplätze freihalten, bis das betreffende gebuchte, jedoch noch nicht zur Beladung bereite Fahrzeug am Hafenterminal angekommen ist.

Aufgrund der Tatsache, dass alle Angaben über eine Funkstrecke übertragen werden können und dass bereits beim Check-In feststeht, welches Fahrzeug das Terminal befahren wird, kann der Frachtoffizier zeitnah und online erfahren, welches Fahrzeug für die weitere Beladung abgerufen werden kann. Nach Beendigung des Verladevorgangs stehen nicht nur die Anzahl der verladenen Fahrzeuge sondern durch das Einlesen des mobilen Datenträgers auch das konkrete Fahrzeug fest. Ferner wird der Standort zumindest der Gefahrguttransporter unmittelbar beim Verladen zumindest über das mobile Anzeigegerät eingegeben. Der Frachtplan, der für jede Fahrt eines Schiffs anzufertigen ist, kann unmittelbar auf einem Drucker über die zentrale Verarbeitungsanlage ausgegeben werden.

Das System kann eine weitere mobile Leseeinheit 31 umfassen, die vom Schiffspersonal auf den Decks 18 des Schiffs 15 getragen wird. Das weitere mobile Lesegerät kann ebenfalls den mobilen Datenträger erfassen und den eingelesenen Identifizierungswert an die zentrale Datenverarbeitungsanlage 26 über eine drahtlose Datenübertragungsstrecke übermitteln. Hiermit wird mit absoluter Sicherheit festgestellt, dass sich das im Wartebereich eingelesene Fahrzeug tatsächlich auf dem Schiff befindet. Es kann hier vorgesehen werden, dass der Status des Fahrzeugs erst dann auf "geladen" gesetzt wird. Es wird vermieden, dass ein Fahrzeug bereits dann als beladen gilt, wenn es durch das mobile Lesegerät 28 im Bereich der Wartespuren über den mobilen Datenträger erfasst worden ist. Vor allen Dingen besteht die Gefahr darin, dass bei größeren Entfernungen zwischen Wartespur und Verladerampe 16 das Fahrzeug nach dem Einlesen nicht zum richtigen Schiff gelangt. Dennoch würde das Fahrzeug als verladen gelistet werden.

Es kann alternativ oder zusätzlich vorgesehen werden, dass auch das mobile Anzeigegerät 27 eine entsprechende opto-elektronische oder elektronische Leseeinheit umfasst. Hiermit kann der mobile Datenträger des Fahrzeugs auf der Verladerampe 16 eingelesen werden. Auch dann ist sichergestellt, dass das betreffende Fahrzeug mit Sicherheit verladen worden ist. Sofern sowohl das Lesegerät als auch das Anzeigegerät als auch das weitere Lesegerät den mobilen Datenträger einlesen können, kann vorgesehen werden, dass der Status des betreffenden Fahrzeugs stufenweise von "geladen" über "geladen" auf "geladen und/oder Stellplatz bestätigt"aktualisiert wird. Der Beladevorgang wird dadurch noch transparenter.

Das weitere mobile Lesegerät 31 kann auch so ausgebildet sein, dass nicht nur der mobile Datenträger sondern auch ein weiterer Datenträger in Folge einlesbar ist, über den der Stellplatz und/oder der Stellbereich des Schiffs einlesbar ist. Das Schiffspersonal braucht daher zunächst nur den mobilen Datenträger des Fahrzeugs und anschließend den Datenträger, der den Stellplatz wiedergibt, nacheinander einzulesen oder umgekehrt, um nicht nur das tatsächlich verladene Fahrzeug sondern auch dessen Stellplatz auf dem Schiff zu erfassen. Diese Werte können unmittelbar an die zentrale Datenverarbeitungsanlage 26 übermittelt werden, so dass ein vollständiger Beladeplan in kürzester Zeit erstellt werden kann. Insbesondere enthält dieser Frachtplan nicht nur die Angaben über die Stellplätze, die mit Gefahrengut belegt sind, sondern auch über alle anderen Fahrzeuge und deren Stellplätze, so dass eine Überprüfung in einem eventuellen Schadensfall erleichtert wird.

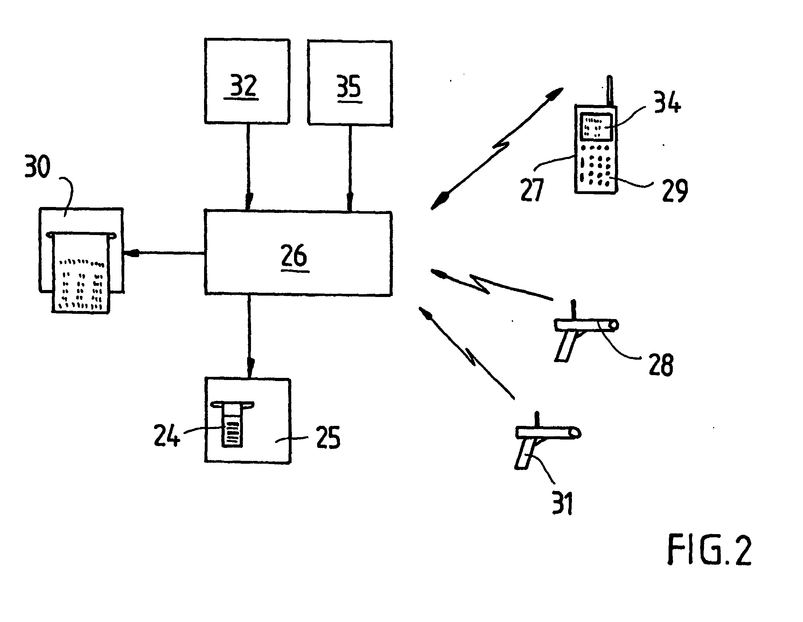

Das System zur Überwachung der Beladung oder des Beladevorgangs eines Schiffs 15 weist gemäß Fig. 2 eine zentrale Datenverarbeitungsanlage 26 auf, in der alle für die Beladung erforderlichen Daten gesammelt werden. Diese Datenverarbeitungsanlage steht in Verbindung mit einer Eingabeeinheit 35, mit der die eingecheckten Fahrzeuge erfasst werden. Ferner ist eine Eingabeeinheit 32 vorgesehen, mit der die Buchungen für eine bestimmte Fahrt eines Schiffs erfasst werden. Diese Werte können auf einem entsprechenden Speichermedium abgelegt sein. Es ist ein Drucker 30 vorhanden, über den Buchungslisten, Check-In-Listen oder aber auch später Beladepläne und dergleichen ausdruckbar sind. Nach dem Check-In erfolgt die Ausgabe eines mobilen Datenträgers 24, der zumindest einen Zuordnungswert für den Datensatz des betreffenden Fahrzeugs enthält. Es kann vorgesehen werden, dass der mobile Datenträger durch eine Schreibeinrichtung 25 neu erstellt wird, wenn ein Fahrzeug zur Beladung bereit ist. Das Drucken eines Barcodes oder dergleichen, der mit dem Lesegerät erfassbar ist, kann mit herkömmlichen Druckern ohne weiteres durchgeführt werden. Alternativ kann ein vorhandener oder vorgefertigter mobiler Datenträger durch eine Zuordnungseinheit einem Datensatz eines Fahrzeugs zugeordnet werden, wenn das Fahrzeug zur Beladung bereit ist. Dies kann beispielsweise dadurch erfolgen, dass ein vorhandener Barcode mittels eines Lesescanners einem Datensatz über den Zuordnungswert zugeordnet wird. Beides erlaubt eine eindeutige Zuordnung des mobilen Datenträgers mit dem Datensatz nur eines Fahrzeugs. Der Zuordnungswert wird in der Regel ein interner Code sein und von dem Identifizierungswert abweichen. Grundsätzlich können aber auch beide Werte übereinstimmen.

Der mobile Datenträger 24 ist elektronisch und/oder opto-elektronisch lesbar und wird am Fahrzeug mitgeführt. Es ist ein Lesegerät 28 vorgesehen, dass über eine drahtlose Datenübertragungsstrecke mit der zentralen Datenverarbeitungsanlage 26 in Verbindung steht und mit dem die mobilen Datenträger gelesen werden können. Diese Datenübertragungsstrecke kann unidirektional sein, da hiermit lediglich der mobile Datenträger beziehungsweise die darauf befindlichen Daten übermittelt zu werden brauchen.

Es ist ein mobiles Anzeigegerät 27 vorgesehen, dass drahtlos mit der zentralen Datenverarbeitungsanlage 26 in Verbindung steht. Auf dem Display 34 können die für den Frachtoffizier wesentlichen Daten angezeigt werden. Über eine Eingabeeinheit 29 werden ergänzende Angaben für die Verladung von bestimmten Fahrzeugen der zentralen Datenverarbeitungsanlage 26 übermittelt oder von dieser abgerufen. Ferner kann ein weiteres mobiles Lesegerät 31 vorhanden sein, das ebenfalls geeignet ist, den mobilen Datenträger zu lesen und die darauf gespeicherten Daten zu erfassen. Hierdurch ist es möglich, die tatsächlich auf den Schiff befindlichen Fahrzeuge anhand des mobilen Datenträgers zu erfassen und der zentralen Datenverarbeitungsanlage 26 zu übermitteln. Nach Beendigung des Beladevorgangs können alle Daten in Form des Beladeplans einschließlich der Belegung des Schiffs über den Drucker 30 als Hartkopie ausgedruckt werden.

Es ist offensichtlich, dass dieses System die Beladung eines Schiffs wesentlich erleichtert. Es ist vor allen Dingen nicht erforderlich, dass der Frachtoffizier mit komplizierten und teilweise nicht mehr aktuellen Papierlisten umgehen muss. Die erforderlichen Informationen erhält er zeitnah und vorzugsweise in kompakter Form auf dem mobilen Anzeigegerät. Aufgrund der Tatsache, dass nur solche Fahrzeuge erfasst werden können und somit verladen werden, die tatsächlich für die betreffende Fahrt gebucht haben und von dem Lesegerät erfasst worden sind, werden Fehlverladungen zuverlässig vermieden. Schließlich kann der Beladeplan wesentlich schneller und wesentlich genauer angefertigt werden.

## Patentansprüche

1. System zur Überwachung der Beladung oder des Beladevorgangs eines Schiffs mit Fahrzeugen (11, 12, 13), mit einer zentralen Datenverarbeitungsanlage (26) mit wenigstens einem Speichermedium, auf dem die für die Beladung gebuchten Fahrzeuge mittels wenigstens eines Datensatzes mit wenigstens einem Identifizierungswert gespeichert sind, der das Fahrzeug eindeutig identifiziert, und mit einem elektronisch und/oder opto-elektronisch lesbaren mobilen Datenträger (24), auf dem zumindest ein Zuordnungswert des Datensatzes eines zur Beladung bereiten Fahrzeugs gespeichert und/oder lesbar ist, sowie mit wenigstens einem mobilen Anzeigegerät (27), das über eine drahtlose Datenübertragungsstrecke mit der zentralen Datenverarbeitungsanlage (26) in Verbindung steht und zumindest die Anzahl und/oder die Frachtlänge der zur Beladung gebuchten Fahrzeuge und die Anzahl und/oder die Frachtlänge der für die Beladung bereiten Fahrzeuge von der zentralen Datenverarbeitungsanlage empfängt und auf einem Display anzeigt, und mit wenigstens einem mobilen elektronischen und/oder opto-elektronischen Lesegerät (28) zum Erfassen zumindest des Zuordnungswertes auf dem mobilen Datenträger (24) eines zur Beladung vorgesehenen Fahrzeugs, welches Lesegerät über eine drahtlose Datenübertragungsstrecke zumindest mit der zentralen Datenverarbeitungsanlage und/oder dem mobilen Anzeigegerät in Verbindung steht, um zumindest den Zuordnungswert unmittelbar oder über die zentrale Datenverarbeitungsanlage an das mobile Anzeigegerät zu übermitteln derart, dass zumindest ein Identifizierungswert des zur Beladung vorgesehenen Fahrzeugs auf dem Display (34) des Anzeigegeräts (27) anzeigbar ist.

2. System nach Anspruch 1, **dadurch gekennzeichnet, dass** die Anzahl und/oder die Frachtlänge der zur Beladung vorgesehenen Fahrzeuge entsprechend dem Fortschritt der Beladung erfasst und/oder aktualisiert und an das Anzeigegerät (27) übertragen werden sowie auf dem Display angezeigbar ist.

3. System nach einem der Ansprüche 1 oder 2, **dadurch gekennzeichnet, dass** zumindest die für die Beladung maßgeblichen Werte der Datensätze der für die Beladung gebuchten und/oder der für die Beladung bereiten und/oder der für die Beladung vorgesehenen Fahrzeuge über das Anzeigegerät (27) abrufbar und auf dem Display anzeigbar sind.

4. System nach einem der Ansprüche 1 bis 3, **dadurch gekennzeichnet, dass** der Datensatz eines Fahrzeugs die Art des Fahrzeugs, die Länge des Fahrzeugs, die Anzahl der Personen sowie besondere Merkmale, wie Höhe, Frachtart oder bestimmte Erfordernisse für die Beladung und insbesondere das oder die amtlichen Kennzeichen enthält.

5. System nach einem der Ansprüche 1 bis 4, **dadurch gekennzeichnet, dass** der mobile Datenträger durch eine Datenträgerschreibeinrichtung erstellt wird, wenn ein Fahrzeug zur Beladung bereit ist.

6. System nach einem der Ansprüche 1 bis 4, **dadurch gekennzeichnet, dass** ein vorhandener oder vorgefertigter mobiler Datenträger durch eine Zuordnungseinheit einem Datensatz eines Fahrzeugs zugeordnet wird, wenn das Fahrzeug zur Beladung bereit ist.

7. System nach einem der Ansprüche 1 bis 5 oder 6, **dadurch gekennzeichnet, dass** die Aktualisierung der auf dem mobilen Anzeigegerät (27) anzeigbaren Werte und Daten und insbesondere die Anzeige der für die Beladung vorgesehenen Fahrzeuge selbsttätig bei jeder Änderung beziehungsweise nach jedem Erfassen durch das Lesegerät erfolgt.

8. System nach einem der Ansprüche 1 bis 5 oder 6, **dadurch gekennzeichnet, dass** die Aktualisierung der auf dem mobilen Anzeigegerät (27) anzeigbaren Werte und Daten nach Aufforderung durch das mobile Anzeigegerät erfolgt.

9. System nach einem der Ansprüche 1 bis 7 oder 8, **dadurch gekennzeichnet, dass** die Aktualisierung der auf dem mobilen Anzeigegerät (27) anzeigbaren Werte und Daten zumindest im Falle einer tatsächlichen Änderung oder einer abrufbaren Änderung der Anzeige optisch und/oder akustisch durch das Anzeigegerät gesondert gemeldet wird.

10. System nach einem der Ansprüche 1 bis 9, **dadurch gekennzeichnet, dass** die Erfassung eines Identifizierungswertes durch das Lesegerät (28, 31) optisch und/oder akustisch angezeigt wird.

11. System nach einem der Ansprüche 1 bis 10, **dadurch gekennzeichnet, dass** das mobile Anzeigegerät (27) eine elektronische und/oder opto-elektronische Leseeinheit umfasst, über die zumindest der mobile Datenträger lesbar und/oder dessen Zuordnungswert erfassbar ist.

12. System nach einem der Ansprüche 1 bis 11, **dadurch gekennzeichnet, dass** das mobile Anzeigegerät (27) eine Eingabeeinheit umfasst, über die Eingaben und Angaben über das beladene Fahrzeug eingegeben und an die zentrale Datenverarbeitungsanlage (26) übertragen werden können.

13. System nach einem der Ansprüche 1 bis 12, **dadurch gekennzeichnet, dass** wenigstens ein weiteres mobiles elektronisches und/oder opto-elektronisches Lesegerät (31) vorhanden ist, das über eine drahtlose Datenübertragungsstrecke zumindest mit der zentralen Datenverarbeitungsanlage (26) in Verbindung steht und mit dem zumindest der mobile Datenträger gelesen und/oder dessen Zuordnungswert des beladenen Fahrzeugs erfasst und an die zentralen Datenverarbeitungsanlage übertragen wird.

14. System nach Anspruch 13, **dadurch gekennzeichnet, dass** das weitere Lesegerät (31) eine Eingabeeinheit umfasst, über die der Standort des Fahrzeugs auf dem Schiff eingebbar ist.

15. System nach einem der Ansprüche 10 oder 11, **dadurch gekennzeichnet, dass** auf dem Schiff (15) elektronisch und/oder opto-elektronische lesbare Datenträger vorhanden sind, die den Stellplatz oder den Stellbereich auf dem Schiff markieren und die durch das weitere Lesegerät Lesbar sind.

16. System nach einem der Ansprüche 1 bis 15, **dadurch gekennzeichnet, dass** das mobile Anzeigegerät (27), das mobile Lesegerät (28) und/oder das weitere mobile Lesegerät (31) gleichartig ausgebildet sind.

17. System nach Anspruch 16, **dadurch gekennzeichnet, dass** das mobile Anzeigegerät, das mobile Lesegerät und das weitere mobile Lesegerät unterschiedliche Programmierungen für die jeweilige Funktion besitzen und in entsprechende Weise mit der zentralen Datenverarbeitungsanlage zusammenwirken.

18. System nach Anspruch 16, **dadurch gekennzeichnet, dass** das mobile Anzeigegerät (27), das mobile Lesegerät (28) und/oder das weitere mobile Lesegerät (31) als Terminal ausgebildet sind, deren Eingaben oder Anzeigen durch eine vorgebbare Tastenfolge zu der Datenverarbeitung gesandt oder von dieser empfangen werden.

## Claims

1. System for monitoring the load or operation of loading a ship with vehicles (11, 12, 13), comprising a central data processing unit (26) with at least one storage medium on which the vehicles registered for loading are stored by means of at least one data record having at least one identification value which uniquely identifies the vehicle, and comprising an electronically and/or opto-electronically readable mobile data carrier (24) on which at least one association value of the data record of a vehicle ready for loading is stored and/or can be read, and also comprising at least one mobile display unit (27) which is connected via a wireless data transmission path to the central data processing unit (26) and receives from the central processing unit and displays on a screen at least the number and/or freight length of the vehicles registered for loading and the number and/or freight length of the vehicles ready for loading, and comprising at least one mobile electronic and/or opto-electronic reader (28) for recording at least the association value on the mobile data carrier (24) of a vehicle scheduled for loading, said reader being connected via a wireless data transmission path at least to the central data processing unit and/or the mobile display unit in order to transmit at least the association value directly or via the central data processing unit to the mobile display unit such that at least one identification value of the vehicle scheduled for loading can be displayed on the screen (34) of the display unit (27).

2. System according to Claim 1, **characterized in that** the number and/or freight length of the vehicles scheduled for loading is recorded and/or updated as the loading operation proceeds and is transmitted to the display unit (27) and can be displayed on the screen.

3. System according to either of Claims 1 and 2, **characterized in that** at least the value relevant to the loading operation of the data records of the vehicles registered for loading and/or ready for loading and/or scheduled for loading can be called up via the display unit (27) and displayed on the screen.

4. System according to any of Claims 1 to 3, **characterized in that** the data record of a vehicle contains the type of vehicle, the length of the vehicle, the number of people and also special features such as height, type of cargo or specific requirements for loading and in particular the registration number(s).

5. System according to any of Claims 1 to 4, **characterized in that** the mobile data carrier is prepared by a data carrier writing device when a vehicle is ready for loading.

6. System according to any of Claims 1 to 4, **characterized in that** an existing or pre-prepared mobile data carrier is assigned by an association unit to a data record of a vehicle when the vehicle is ready for loading.

7. System according to any of Claims 1 to 5 or 6, **characterized in that** the updating of the values and data that can be displayed on the mobile display unit (27), and in particular the displaying of the vehicles scheduled for loading, takes place automatically in the event of any change or after any recording by the reader.

8. System according to any of Claims 1 to 5 or 6, **characterized in that** the updating of the values and data that can be displayed on the mobile display unit (27) takes place upon request by the mobile display unit.

9. System according to any of Claims 1 to 7 or 8, **characterized in that** the updating of the values and data that can be displayed on the mobile display unit (27) is reported separately optically and/or acoustically by the display unit at least in the case of an actual change or a change in the display that can be called up.

10. System according to any of Claims 1 to 9, **characterized in that** the recording of an identification value by the reader (28, 31) is displayed optically and/or acoustically.

11. System according to any of Claims 1 to 10, **characterized in that** the mobile display unit (27) comprises an electronic and/or opto-electronic reader via which at least the mobile data carrier can be read and/or the association value of the latter can be recorded.

12. System according to any of Claims 1 to 11, **characterized in that** the mobile display unit (27) comprises an input unit via which the inputs and information regarding the loaded vehicle can be input and transmitted to the central data processing unit (26).

13. System according to any of Claims 1 to 12, **characterized in that** there is at least one further mobile electronic and/or opto-electronic reader (31) which is connected via a wireless data transmission path at least to the central data processing unit (26) and by means of which at least the mobile data carrier is read and/or the latter's association value of the loaded vehicle is recorded and transmitted to the central data processing unit.

14. System according to Claim 13, **characterized in that** the further reader (31) comprises an input unit via which the location of the vehicle on the ship can be input.

15. System according to either of Claims 10 and 11, **characterized in that** on the ship (15) there are electronically and/or opto-electronically readable data carriers which mark the parking space or parking area on the ship and can be read by the further reader.

16. System according to any of Claims 1 to 15, **characterized in that** the mobile display unit (27), the mobile reader (28) and/or the further mobile reader (31) are designed in the same manner.

17. System according to Claim 16, **characterized in that** the mobile display unit, the mobile reader and the further mobile reader are programmed differently for the respective function and interact in a corresponding manner with the central data processing unit.

18. System according to Claim 16, **characterized in that** the mobile display unit (27), the mobile reader (28) and/or the further mobile reader (31) are designed as terminals, the inputs or displays of which can be sent to the data processing or received by the latter via a predefinable sequence of keys.

## Revendications

1. Système de surveillance du chargement ou du processus de chargement d'un bateau avec des véhicules automobiles (11, 12, 13), comportant
- une installation centrale de traitement de données (26) équipée d'au moins un support de mémoire dans lequel les véhicules automobiles inscrits pour le chargement sont enregistrés au moyen d'au moins un enregistrement de données ayant au moins une valeur d'identification qui identifie de façon univoque le véhicule automobile,
- un support mobile de données (24) lisible électroniquement ou optoélectroniquement, sur lequel au moins une valeur d'affectation de l'enregistrement de données peut être enregistrée et/ou lue pour un véhicule automobile prêt au chargement,
- ainsi qu'au moins un appareil mobile d'affichage (27) en liaison avec l'installation centrale de traitement de données (26) par une transmission de données sans fil et qui reçoit de l'installation centrale de traitement de données au moins le nombre et/ou la longueur de cargaison des véhicules automobiles inscrits au chargement, et le nombre et/ou la longueur de cargaison des véhicules automobiles prêts pour le chargement et l'affiche sur un moniteur, et
- au moins un appareil mobile de lecture (28) électronique ou optoélectronique pour acquérir au moins la valeur d'affectation du support mobile de données (24) d'un véhicule automobile prévu au chargement, l'appareil de lecture étant en liaison par une transmission de données sans fil avec l'installation centrale de traitement de données et/ou l'appareil mobile d'affichage, de façon à transmettre à l'appareil mobile d'affichage directement ou par l'installation centrale de traitement de données au moins la valeur d'affectation, de manière à ce qu'au moins une valeur d'identification du véhicule automobile prévu au chargement puisse être affichée sur le moniteur (34) de l'appareil d'affichage (27).

2. Système selon la revendication 1,
**caractérisé en ce que**
le nombre et/ou la longueur de cargaison des véhicules automobiles prévus au chargement sont acquis et/ou mis à jour en fonction de l'avancement du chargement et transmis à l'appareil d'affichage (27) ainsi qu'affichables sur le moniteur.

3. Système selon l'une des revendications 1 ou 2,
**caractérisé en ce qu'**
au moins les valeurs déterminantes pour le chargement des enregistrements de données des véhicules automobiles inscrits pour le chargement et/ou prêts pour le chargement et/ou prévus pour le chargement peuvent être appelées par l'appareil d'affichage (27) et sont affichables sur le moniteur.

4. Système selon l'une quelconque des revendications 1 à 3,
**caractérisé en ce que**
l'enregistrement de données d'un véhicule automobile contient la longueur du véhicule automobile, le nombre de personnes ainsi que des caractéristiques particulières telles que la hauteur, le type de cargaison ou certaines contraintes pour le chargement et, en particulier la ou les identifications administratives.

5. Système selon l'une quelconque des revendications 1 à 4,
**caractérisé en ce que**
le support mobile de données est créé par un dispositif d'écriture de support de données lorsqu'un véhicule automobile est prêt au chargement.

6. Système selon l'une quelconque des revendications 1 à 4,
**caractérisé en ce qu'**
un support mobile de données existant ou préalablement créé se voit affecter un enregistrement de données d'un véhicule automobile par une unité d'affectation lorsque le véhicule automobile est prêt au chargement.

7. Système selon l'une des revendications 1 à 5 ou 6,
**caractérisé en ce que**
la mise à jour des valeurs et données affichables sur l'appareil mobile d'affichage (27) et, en particulier, l'affichage des véhicules automobiles prévus pour le chargement, s'effectuent automatiquement à chaque modification, en particulier après chaque acquisition par l'appareil de lecture.

8. Système selon l'une des revendications 1 à 5 ou 6,
**caractérisé en ce que**
la mise à jour des valeurs et données affichables sur l'appareil mobile d'affichage (27) s'effectue sur demande de l'appareil mobile d'affichage.

9. Système selon l'une des revendications 1 à 7 ou 8,
**caractérisé en ce que**
la mise à jour des valeurs et données affichables sur l'appareil mobile d'affichage (27) est signalée spécialement optiquement et/ou acoustiquement par l'appareil d'affichage, au moins dans le cas d'une modification réelle ou d'une modification demandée de l'affichage.

10. Système selon l'une quelconque des revendications 1 à 9,
**caractérisé en ce que**
l'acquisition d'une valeur d'identification par l'appareil de lecture (28, 31) est indiquée optiquement et/ou acoustiquement.

11. Système selon l'une quelconque des revendications 1 à 10,
**caractérisé en ce que**
l'appareil mobile d'affichage (27) comprend une unité de lecture électronique ou optoélectronique permettant au moins de lire le support mobile de données et/ou de saisir sa valeur d'affectation.

12. Système selon l'une quelconque des revendications 1 à 11,
**caractérisé en ce que**
l'appareil mobile d'affichage (27) comprend une unité de saisie permettant d'introduire les entrées et les données sur le véhicule automobile chargé et de les transmettre à l'installation centrale de traitement de données (26).

13. Système selon l'une quelconque des revendications 1 à 12,
**caractérisé en ce qu'**
au moins un autre appareil mobile de lecture (31) électronique ou optoélectronique est en liaison par une transmission de données sans fil au moins avec l'installation centrale de traitement de données (26), et permet au moins de lire le support mobile de données et/ou de saisir sa valeur d'affectation et de les transmettre à l'installation centrale de traitement de données.

14. Système selon la revendication 13,
**caractérisé en ce que**
l'autre appareil de lecture (31) comprend une unité de saisie de l'emplacement du véhicule automobile sur le bateau.

15. Système selon l'une des revendications 10 à 11,
**caractérisé en ce que**
le bateau (15) comporte des supports de données lisibles électroniquement ou optoélectroniquement, qui marquent l'emplacement de dépôt ou la zone de dépôt sur le bateau et qui sont lisibles par l'autre appareil de lecture.

16. Système selon l'une quelconque des revendications 1 à 15,
**caractérisé en ce que**
l'appareil mobile d'affichage (27), l'appareil mobile de lecture (28) et/ou l'autre appareil mobile de lecture (31) sont de même type.

17. Système selon la revendication 16,
**caractérisé en ce que**
l'appareil mobile d'affichage, l'appareil mobile de lecture et l'autre appareil mobile de lecture possèdent des programmations différentes pour la fonction correspondante et fonctionnent conjointement de manière correspondante avec l'installation centrale de traitement de données.

18. Système selon la revendication 16,
**caractérisé en ce que**
l'appareil mobile d'affichage (27), l'appareil mobile de lecture (28) et/ou l'autre appareil mobile de lecture (31) sont des terminaux dont les entrées ou affichages sont envoyés au traitement de données par une suite de touches prédéfinissable, ou reçus par celui-ci.
